# EUROPEAN PATENT APPLICATION

(11) **EP 4 113 659 A1**
(43) Date of publication of application: **04.01.2023**
(21) Application number: 22181894.1
(22) Date of filing: 29.06.2022
(51) Int. Cl.: H01M 4/36, H01M 4/525, H01M 4/587, H01M 4/38, H01M 4/48, H01M 10/0525, H01M 4/02

(54) **LITHIUM SECONDARY BATTERY**

(30) Priority: 29.06.2021 KR 20210084718
(71) Applicant: SK On Co., Ltd., Seoul 03188 (KR)
(72) Inventor: HAN, Kook Hyun, 34124 Daejeon (KR); PARK, Eun Jun, 34124 Daejeon (KR); YOO, Kyung Bin, 34124 Daejeon (KR); HWANG, Duck Chul, 34124 Daejeon (KR)
(74) Representative: Stolmár & Partner Patentanwälte PartG mbB

(57) **Abstract**

A lithium secondary battery according to an embodiment of the present invention comprises a cathode and an anode. The cathode comprises lithium metal oxide particles that contains lithium and metal elements. The lithium metal oxide particles have a concentration gradient region formed in at least one region between a center and a surface. A concentration of at least one of the metal elements is changed in the concentration gradient region. The anode comprises an anode active material that contains a silicon-based active material and a carbon-based active material. A content of the carbon-based active material in the anode active material is greater than a content of the silicon-based active material.

## Description

### CROSS-REFERENCE TO RELATED APPLICATION AND CLAIM OF PRIORITY

This application claims priority to Korean Patent Application No. 10-2021-0084718 filed on June 29, 2021 in the Korean Intellectual Property Office (KIPO), the entire disclosure of which is incorporated by reference herein.

### BACKGROUND

### 1. Field

The present invention relates to a lithium secondary battery also known as "lithium battery", "lithium-ion battery", "lithium-ion secondary battery", etc. More particularly, the present invention relates to a lithium secondary battery including a lithium metal oxide-based cathode active material.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of a hybrid automobile, an electric vehicle, etc.

The secondary battery may be, e.g., a lithium secondary battery, a nickel-cadmium battery, a nickel-hydrogen battery, etc. The lithium secondary battery is appreciated because of high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

As an application range of the lithium secondary battery is expanded, constructions of a cathode active material and an anode active material in the lithium secondary battery are required which have higher capacity and/or higher energy density, especially within a limited unit volume.

For example, constructions of the cathode active material and the anode active material are aimed at increasing the capacity while also improving life-span and storage/mechanical stability at high temperatures.

For example, Korean Published Patent Application No. 10-2017-0093085 discloses a cathode active material including a transition metal compound and an ion adsorption binder. For example, Korean Published Patent Application No. 10-2016-0144804 discloses a lithium-based anode active material, which does not provide sufficient energy density and enhanced life-span and stability at high temperature.

### SUMMARY

It is an object of the present invention to provide an improved lithium secondary battery, in particular a lithium secondary battery improved with respect to capacity and/or energy density, especially within a limited unit volume, and/or life-span stability, especially at high temperatures, and/or storage stability and/or mechanical stability. The object is solved by the lithium secondary battery according to claim 1. Refinements of the invention are defined in the dependent claims and described in the description below. The features defined in the dependent claims and described for various embodiments of the invention may be combined with each other wherever this is technically possible.

According to an aspect of the present invention, there is provided a lithium secondary battery which may in particular have improved operational stability and/or improved mechanical stability and/or improved reliability.

A lithium secondary battery according to an embodiment of the present invention includes a cathode and an anode. The cathode includes lithium metal oxide particles that contain lithium and further metal elements, i.e. metal elements that are different from lithium. Herein, the terms "metal element" and "metal" do not imply that the chemical element in question is present in a metallic state. Rather, the terms mean that the chemical element in question is one of those elements of the periodic table that are metals if they are in their elemental form with oxidation state zero. The lithium metal oxide particles have a concentration gradient region formed in at least one region between a center and a surface of the lithium metal oxide particles, i.e. a concentration gradient region is formed between the center and the surface of each particle. Herein, the term "center" in particular refers to the center of gravity of an individual particle. A concentration of at least one of the metal elements is changed in the concentration gradient region. The anode comprises an anode active material that contains a silicon-based active material and that further contains a carbon-based active material. The anode is disposed to face the cathode. A content of the carbon-based active material in the anode active material is greater than a content of the silicon-based active material.

Herein, the term "concentration gradient" in particular means that the concentration of the chemical element in question is changed in a specific portion of the particle, particularly in a direction from the center to the surface of the particle, such that the concentration on the side of the portion that is closest to the center is different from the concentration on the side of the portion that is closest to the surface. This portion is referred to as "concentration gradient region".

In some embodiments, the lithium metal oxide particles comprise a first metal and a second metal as further metal elements, a concentration of said first metal may continuously decrease in a direction from the center to the surface in the concentration gradient region, and a concentration of said second metal may continuously increase in a direction from the center to the surface in the concentration gradient region.

In some embodiments, the lithium metal oxide particles may further comprise a third metal as one of the further metal elements, and a concentration of the third metal may be constant from the center to the surface. Herein, the term "constant" means essentially constant with a tolerance of ± 5 %.

In some embodiments, a slope of a concentration gradient may be constant in the concentration gradient region. This means that the concentration of at least one of the further metal elements is changed in the concentration gradient region in the direction from the particle center towards the particle surface such that a concentration gradient with a constant slope results. This particularly means that the change of the concentration is continuous and follows a linear concentration profile. Preferably, the slope is constant throughout the concentration gradient region. In the present application, "constant" in the context of a concentration profile means essentially constant with a tolerance of ± 5%. In addition or alternatively, it is preferred that all further metal elements that do not have a constant concentration profile in the concentration gradient region have a concentration gradient with a constant slope in the concentration gradient region.

In some embodiments, the lithium metal oxide particles may have a core region occupying a predetermined radial extension from the center toward the surface, wherein in the core region, the concentrations of the further metal elements are constant. That is, the core region of a specific particle starts at the center of this particle and radially extends in the direction towards the surface of this particle. Preferably, the predetermined radial extension is 50% or more of a radius of the lithium metal oxide particles from the center.

Preferably, the lithium concentration is constant throughout the entire cross-section of the lithium metal oxide particles.

In the context of the present description, the terms "radius" and "radial" do not imply that the lithium metal oxide particles are necessarily spherical. They may be spherical, i.e. approximately having the shape of a sphere. They may also be essentially spherical or may have another shape, e.g. approximately the shape of an ellipsoid. Irrespective of whether the particles are spherical or not, the terms "radius" and "radial" may be used to describe the extension and the structure of the particles along a path starting at the center of the particles and extending in a specific spatial direction. Herein, the "center" of the particles is preferably understood as their center of gravity. Herein, preferably for each spatial direction, i.e. for each solid angle, there is a specific radius whose length corresponds to the distance between the center and the surface measured in this direction. If, for instance, the particles have the shape of a tri-axial ellipsoid, the term "radius" is preferably understood such that the radius in a first direction corresponds to the first principal semi-axis, the radius in a second direction perpendicular to the first direction corresponds to the second principal semi-axis, the radius in a third direction perpendicular to both the first and the second direction corresponds to the third principal semi-axis, etc. In the same manner, the term "radius" is to be understood for other shapes deviating from the shape of a sphere.

In some embodiments, the concentration gradient region may extend from the surface of the lithium metal oxide particles to a surface of the core region of the lithium metal oxide particles.

In some embodiments, the lithium metal oxide particles may have a shell region in which concentrations of the further metal elements are constant, and the shell region of a specific lithium metal oxide particle may extend from the surface of this lithium metal oxide particle in a direction toward the center of this lithium metal oxide particle.

In some embodiments, a radial extension of the shell region from the surface of the lithium metal oxide particles may be from 1% to 20% of a radius of the lithium metal oxide particles.

In some embodiments, the concentration gradient region may extend from the surface of the shell region of the lithium metal oxide particles to a surface of the core region of the lithium metal oxide particles.

When referring to the "radial extension" of a specific region (core region, shell region, concentration gradient region, etc.) of a particle, its thickness in a specific spatial direction is meant. That is, when considering the radial path starting at the particle center and ending at the particle surface, the radial extension of a specific region corresponds to the distance between the beginning of the specific region along the radial path and the end of the specific region along the radial path. In other words, the radial extension corresponds to the length of the portion of the radial path that corresponds to the specific region.

In some embodiments, a distance between an outer surface of the concentration gradient region and the surface of the lithium metal oxide particles may be shorter than a distance between an inner surface of the concentration gradient region and the center of the lithium metal oxide particles. In this case, the concentration gradient region may be said to be closer to the surface of the lithium metal oxide particles than to the center of the lithium metal oxide particles. It is noted that the "inner surface" of a specific region is understood as the surface closer to the center and therefore the surface corresponding to the boundary between this region and a more central region. Likewise, the "outer surface" of a specific region is understood as the surface more distant from the center and therefore the exterior particle surface or the surface corresponding to the boundary between this region and a region more distant from the center.

In some embodiments, the lithium metal oxide particles may have a single particle form, i.e. they are not formed as secondary particles.

In some embodiments, an average composition of the lithium metal oxide particles may be represented by Chemical Formula 1.

[Chemical Formula 1] LiₓM1ₐM2_{b}M3_{c}O_{y}

In Chemical Formula 1, M1, M2 and M3 each includes at least one selected from the group consisting of Ni, Co, Mn, Na, Mg, Ca, Ti, V, Cr, Cu, Zn, Ge, Sr, Ag, Ba, Zr, Nb, Mo, Al, Ga, W and B, and 0<x≤1.2, 1.98≤y≤2.02, 0.6≤a≤0.99 and 0.01≤b+c≤0.4.

In some embodiments, M1, M2 and M3 may include Ni, Mn and Co, respectively, wherein preferably M1 = Ni, M2 = Mn, and M3 = Co.

In some embodiments, the silicon-based active material may include silicon, a silicon oxide, a silicon-carbon composite, a silicon oxide-carbon composite and/or a silicon-silicon oxide-carbon composite.

In some embodiments, the silicon-based active material may further comprise a metal or a metalloid. The metal or metalloid may include at least one selected from the group consisting of Li, Mg, Ge, Sn, Pb, Al, Ti, Cu, Fe, Ni, Co, Mg, Cr, Zr, Zn, W, Ga, Ba, B, As, Se, Sb, Te, Po and At.

In some embodiments, the silicon oxide may be represented as SiOz (0<z≤2).

In some embodiments, a content of the silicon-based active material may be in a range from 1wt% to 25 wt% based on a total weight of the anode active material.

In some embodiments, a silicon content in the silicon-based active material may be in a range from 1 wt% to 48 wt% based on a total weight of the anode active material.

In some embodiments, the carbon-based active material may include artificial graphite, soft carbon, hard carbon, carbon nanotube, carbon fiber, pitch and/or cokes (in particular petcoke and/or other carbon material obtained by heating coal or oil in the absence of air).

According to the invention, the lithium metal oxide particles in the cathode have a concentration gradient region formed between a center and a surface, and the anode comprises a silicon-based active material. For example, a high-nickel (high-Ni) composition with a relatively high nickel content (higher than at the surface) may be formed in the central portion of the lithium metal oxide particles, and a high-manganese (high-Mn) composition with a relatively high manganese content (higher than at the center) may be formed in the surface portion. In this case, the Ni concentration at the particle center is higher than at the particle surface and the Mn concentration at the particle center is lower than at the particle surface.

### EXEMPLARY DESCRIPTION OF EFFECTS OBTAINED BY THE INVENTION

For example because of the possible high-Ni central portion and the high-Mn surface portion, high capacity and high energy density may be realized by virtue of the central portion, and chemical and mechanical stability may be improved by virtue of the surface portion.

The silicon-based active material may improve an energy density of a lithium secondary battery. Further, the silicon-based active material may be used together with the chemically and mechanically stable lithium metal oxide particles to improve life-span stability.

In some embodiments, a concentration gradient of an active metal (e.g. a third metal different from lithium being present in addition to the first and second metal elements different from lithium) may be maintained as being substantially constant in the concentration gradient region, so that a composition change and desired performances may be stably and gradually shifted between the central portion and the surface portion.

### BRIEF DESCRIPTION OF THE DRAWINGS

FIGS. 1 and 2 are a schematic top planar view and a schematic cross-sectional view, respectively, illustrating a lithium secondary battery in accordance with exemplary embodiments.
FIGS. 3 and 4 are graphs showing concentration profiles of nickel and manganese, respectively, in a lithium metal oxide particle in accordance with exemplary embodiments.
FIG. 5 is a TEM image showing a cross-section of a lithium metal oxide particle in accordance with Examples.
FIG. 6 is a TEM image showing a cross-section of a lithium metal oxide particle in accordance with Comparative Example.

### DETAILED DESCRIPTION OF THE EMBODIMENTS

According to the present invention, a lithium secondary battery is provided which comprises a cathode comprising lithium metal oxide particles and an anode comprising a silicon-based active material and a carbon-based active material. The lithium secondary battery may for instance have improved energy density, life-span and high-temperature stability.

Hereinafter, the present invention will be described in detail with reference to the embodiments and the accompanying drawings. However, those skilled in the art will appreciate that such embodiments described with reference to the accompanying drawings are provided to further understand the present invention and do not limit subject matters to be protected as disclosed in the detailed description and appended claims.

The terms "first" and "second" are used herein not to limit the number or the order of elements or objects, but to relatively designate different elements.

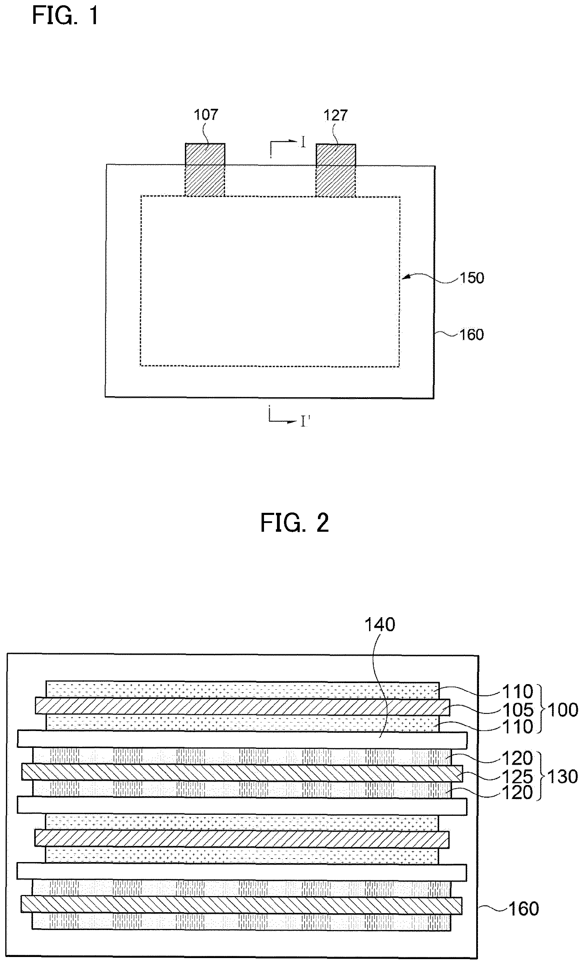

FIGS. 1 and 2 are a schematic top planar view and a schematic cross-sectional view, respectively, illustrating a lithium secondary battery in accordance with exemplary embodiments.

Referring to FIGS. 1 and 2, a lithium secondary battery may comprise a cathode 100, an anode 130 and a separation layer 140 interposed between the cathode and the anode.

The cathode 100 may comprise a cathode current collector 105 and a cathode active material layer 110 formed by coating a cathode active material on the cathode current collector 105. In exemplary embodiments, the cathode active material may comprise lithium metal oxide particles including a concentration gradient region between a center and a surface (e.g., an outermost surface) of the particle.

The lithium metal oxide particles contain lithium and further metal elements. In the lithium metal oxide particles, concentrations of lithium and oxygen may be substantially fixed, i.e. constant in the entire region of the particles, i.e. constant over the entire particle cross-section. A concentration of at least one metal element among the metal elements other than lithium and oxygen changes in the concentration gradient region. The concentration gradient region is formed in at least one region between the center and the surface of the metal oxide particles.

The concentration gradient region may have, e.g., a continuous concentration gradient.

The term "continuous concentration gradient" used herein may indicate a concentration profile which may be changed with a certain trend or tendency between the center and the surface. The certain trend may include an increasing trend or a decreasing trend. In particular, the continuous concentration gradient may be monotonically increasing and monotonically decreasing, respectively, preferably strictly monotonically increasing and strictly monotonically decreasing, respectively.

In exemplary embodiments, a substantially linear concentration gradient may be formed in the concentration gradient region. Accordingly, a substantially constant slope of the concentration gradient may be present in the concentration gradient region, in particular in radial direction.

In exemplary embodiments, a concentration of at least one metal element among the further metal elements other than lithium contained in the lithium metal oxide particles may continuously increase in the concentration gradient region, and a concentration of at least one further metal element among the metal elements other than lithium contained in the lithium metal oxide particles may continuously decrease.

In exemplary embodiments, at least one metal among metals other than lithium contained in the lithium metal oxide particles may have a substantially constant concentration from the center to the surface.

In exemplary embodiments, the further metal elements other than lithium contained in the lithium metal oxide particles may include a first metal M1 and a second metal M2. In particular, a concentration of the first metal M1 may continuously decrease in the concentration gradient region, and the concentration of the second metal M2 may continuously increase in the concentration gradient region.

In exemplary embodiments, the further metal elements other than lithium contained in the lithium metal oxide particles may further include a third metal M3. The third metal M3 may have a substantially constant or uniform concentration from the center to the surface.

The term "concentration" used herein for any of the metal elements M1 to M3 may refer to, e.g., a molar ratio or an atomic percent of the metal element for which the concentration is given relative to the sum of M1 to M3.

For example, the lithium metal oxide particles may include (i) particles in a secondary particle form in which a plurality of primary particles are aggregated, or (ii) particles in a single particle form in which the particles are not aggregated to form secondary particles, or (iii) a form in which particles in secondary particle form and particles in single particle form are mixed.

In exemplary embodiments, the lithium metal oxide particles may at least predominantly have the single particle form, wherein preferably at least 5% of the particles are in the single particle form. In this case, a chemical stability of the lithium metal oxide particles may be improved. In some embodiments, the lithium metal oxide particles may have a single crystal form, i.e. each particle is formed as a single crystal.

The term "single particle form" may be used to exclude the secondary particle formed by, e.g., agglomeration of a plurality of the primary particles. For example, the lithium metal oxide particles may essentially consist of the single particle form such that a secondary particle form in which a plurality of the primary particles (e.g., more than 10, 20 or more, 30 or more, 40 or more, 50 or more, etc.) are assembled or aggregated is be excluded. In the context of the present application, a secondary particle is preferably understood as an aggregate of more than 10 primary particles, more preferably 20 or more, 30 or more, 40 or more, or 50 or more primary particles.

The term "single particle form" is, according to certain embodiments of the invention, not be intended to exclude a monolithic structure in which, e.g., 2 to 10 single particles are attached or adhered to each other. In the context of the present application, such a monolithic structure is preferably limited to 10 single particles attached or adhered to each other. In other embodiments, the term "single particle form" is intended to exclude a monolithic structure in which, e.g., 2 to 10 single particles are attached or adhered to each other.

In some embodiments, the lithium metal oxide particles may include a structure in which a plurality of primary particles are integrally merged with each other to be substantially converted into a single particle.

For example, the lithium metal oxide particles may have a granular (in particular irregular) or ellipsoidal or spherical single particle shape.

In exemplary embodiments, an average composition of the lithium metal oxide particles may be represented by Chemical Formula 1 below.

[Chemical Formula 1] LiₓM1ₐM2_{b}M3_{c}O_{y}

In Chemical Formula 1, M1, M2 and M3 may include at least one selected from the group consisting of Ni, Co, Mn, Na, Mg, Ca, Ti, V, Cr, Cu, Zn, Ge, Sr, Ag, Ba, Zr, Nb, Mo, Al, Ga, W and B. In particular, M1, M2, and M3 may be individually selected from the aforementioned group, wherein preferably M1, M2, and M3 are selected as chemical elements different from each other.

In Chemical Formula 1, 0<x≤1.2, 1.98≤y≤2.02, 0.6≤a≤0.99 and 0.01≤b+c≤0.4. For example, if a precursor of a lithium metal oxide is fired in an air atmosphere, y may be less than 2.

In Chemical Formula 1, M1, M2, and M3 may represent the above-described first metal, the above-described second metal, and the above-described third metal, respectively. In some embodiments, M1, M2, and M3 may each include nickel (Ni), manganese (Mn) and cobalt (Co). Preferably, M1 = Ni, M2 = Mn, and M3 = Co.

In some embodiments, M1, M2 or M3 may include a plurality of metals selected from the group as described above. For example, M1, M2, or M3 may be added during a formation of the lithium metal oxide particles. In some embodiments, M1, M2, or M3 may be derived from doping or coating.

In Chemical Formula 1, a, b, and c may represent average concentrations of M1, M2 and M3 in an entire particle region, respectively. In some embodiments, in Chemical Formula 1, the first metal M1 in Chemical Formula 1 may preferably be nickel, and, e.g., 0.6≤a≤0.99 and 0.01≤b+c≤0.4, preferably 0.7≤a≤0.9 and 0.1≤b+c≤0.3, wherein more preferably, M2 and M3 are Mn and Co, respectively.

If a concentration of M1, in particular Ni, is less than about 0.6, an overall capacity and power of the cathode active material may be degraded. More specifically, if a concentration of M1, in particular Ni, is less than about 0.7, an overall capacity and power of the cathode active material may be excessively degraded. If the concentration of M1, in particular Ni, exceeds about 0.99, an overall life-span of the cathode active material may be reduced, and mechanical instability may be caused. More specifically, if the concentration of M1, in particular Ni, exceeds about 0.9, an overall life-span of the cathode active material may be further reduced, and mechanical instability may be caused. Preferably, 0.75≤a≤0.85, 0.05≤b≤0.15, and 0.05≤c≤0.15. More preferably, 0.77≤a≤0.83, 0.07≤b≤0.13, and 0.07≤c≤0.13, or 0.79≤a≤0.81, 0.08≤b≤0.12 and 0.08≤c≤0.12.

Within the above-described ranges of a, b and c, an average composition of in particular Ni:Co:Mn of the lithium metal oxide particles may be substantially about 8:1:1, and the overall capacity and power from the particles, a particular improvement of the long-term life-span stability and/or the resistance uniformity may be achieved.

For example, nickel may serve as a metal related to a capacity of a lithium secondary battery. As a content of nickel increases, the capacity and power of the lithium secondary battery may be improved. However, if the content of nickel is excessively increased, the life-span may be degraded, and mechanical and electrical stability may also be degraded.

For example, if the content of nickel is excessively increased, defects such as an ignition and a short circuit may not be sufficiently suppressed when a penetration by an external object occurs, and a sufficient capacity retention may not be obtained during repeated charging and discharging at high temperature (e.g., 60 °C or higher).

According to some embodiments, the first further metal M1 may be set as nickel. A relatively high M1 content, in particular a relatively high nickel content, may be maintained in the center portion (particle portion close to the particle center) to achieve the capacity and power of the lithium secondary battery, and the M1 concentration, in particular the nickel concentration, may be relatively reduced in the surface portion (particle portion close to the particle surface) to suppress a reduction of in the capacity and the life-span at high temperature.

As the second further metal element, for example manganese (Mn) may be used. Manganese may in particular serve as a metal related to mechanical and electrical stability of the lithium secondary battery. In some embodiments, the content of M2, in particular a manganese content, at the surface may be increased relatively to that at the center, so that the stability of the cathode active material at high temperature may be improved and the defects such as the ignition and the short circuit caused by the penetration through the surface of the lithium metal oxide particles may be suppressed or reduced to increase the life-span of the lithium secondary battery.

As the third further metal element M3, for example, cobalt (Co) may be used. Cobalt may in particular serve as a metal related to a conductivity or a resistance of the lithium secondary battery. In some embodiments, the content of M3, in particular the cobalt content, may be fixed or constant over substantially the entire region of the lithium metal oxide particles. Thus, improved conductivity and low resistance may be achieved, in particular throughout the entire particle, while maintaining a constant flow of a current and a charge through the cathode active material.

In some embodiments, the lithium metal oxide particles may have a core region occupying a predetermined radial extension (a first radial extension) from the center toward the surface, i.e. in particular such a core region begins at the particle center and extends towards the particle surface (i.e. radially).

For example, the first radial extension may be 50% or more of a radius of the particles from the center of the particle center, preferably, 80% or more of the radius of the particles, more preferably 90% or more of the radius of the particles. A first radial extension of 50% or even more allows for a relatively high overall M1 content (in particular Ni content) and therefore a relatively high capacity and high power of the lithium secondary battery.

For example, the first radial extension may be 2 µm or more. Preferably, the first radial extension may be 3 µm or more, more preferably 4 µm or more, or 4.4 µm or more.

The core region may serve as a constant concentration region (e.g., a first constant concentration region). For example, molar ratios or atomic ratios of Ni, Co, and Mn in the core region may be maintained as being substantially constant, and a higher Ni concentration may be maintained in the core region compared to those in other regions.

As described above, the first radial extension may be 50% or more of the radius of the lithium metal oxide particles, and thus particular high power and high capacity properties may be provided from the central part of the particles.

In some embodiments, the lithium metal oxide particles may have a shell region occupying a predetermined radial extension (a second radial extension) from the surface toward the center. The shell region may serve as a region for extending or maintaining a metal concentration ratio on the surface to a predetermined radial extension. For example, the shell region may have a thickness (e.g., an average thickness) corresponding to the second radial extension.

For example, the shell region may serve as a constant concentration region (e.g., a second constant concentration region). For example, the molar ratios or the atomic ratios of Ni, Co, and Mn or other selections of M1, M2, and M3 in the shell region may be maintained as being substantially constant, and a relatively high M2 concentration, in particular a relatively high Mn concentration, may be maintained compared to that in the core region.

In exemplary embodiments, the second radial extension may be in a range from 1% to 20% of the radius of the particles. Preferably, the second radial extension may be in a range from 1% to 10% of the radius of the particles, more preferably from 1% to 5% of the radius of the particles.

For example, the second radial extension may be 1 µm or less. Preferably, the second radial extension may be 0.5 µm or less, and more preferably 0.2 µm or less, or 0.05 µm or less.

By providing a relatively thin shell region, i.e. by selecting a relatively low second radial extension, a relatively large core region may be possible which provides a particular high power and high capacity properties.

In exemplary embodiments, the second radial extension of the shell region may be less than the first radial extension of the core region.

The core region in which the high-Ni composition is formed may be extended from the center of the particles, and may occupy the largest region in the lithium metal oxide particles, so that high-capacity and high-power structure may be effectively implemented. Further, the core region may be substantially covered by the shell region having the small thickness, so that the life-span and high-temperature capacity retention properties may be remarkably improved.

In some embodiments, an average composition of the core region may be 0.79≤a≤0.9 and 0.08≤b≤0.1 when M1 is Ni and M2 is Mn in the Chemical Formula 1 above. An average composition of the shell region may be 0.7≤a≤0.79 and 0.1≤b≤0.13 when M1 is Ni and M2 is Mn in the Chemical Formula 1 above.

Within the above-mentioned average composition ranges of the core region and the shell region, energy properties and stability of the lithium metal oxide particles may be more effectively improved.

The concentration gradient region may be formed between the core region and the surface of the lithium metal oxide particles. In exemplary embodiments, the concentration gradient region of the lithium metal oxide particles may be formed in a specific region between the center of the particles and the surface of the particles.

For example, the concentration gradient region may be disposed between an outer surface of the core region and the surface of the lithium metal oxide particles.

In some embodiments, a distance between an outer surface of the concentration gradient region and the surface of the particles may be shorter than a distance between an inner surface of the concentration gradient region and the center of the particles, i.e. the concentration gradient region may be closer to the surface of the particle (e.g., the outermost surface) than to the center of the particle.

In some embodiments, the concentration gradient region may be formed between the core region and the shell region. For example, the concentration gradient region may extend from the outer surface of the core region to an inner surface of the shell region.

The concentration gradient region may serve as a transition region or a buffer region for implementing a concentration change between the core region and the shell region. An abrupt change in a concentration between the core region and the shell region may be buffered or prevented by the concentration gradient region.

Thus, the capacity and power of the cathode active material may become uniform or may be averaged throughout the entire region of the particle. Further, a high-Ni region and a high-Mn region may be co-present in the concentration gradient region, so that both capacity and life-span stability may be improved.

In some embodiments, a radial extension of the concentration gradient region from the surface of the particles in a direction toward the center of the particles may be in a range from about 1% to 20% of the radius of the particles. If the radial extension of the concentration gradient region is less than about 1% of the radius of the particles, the concentration change between the core region and the shell region may not be sufficiently buffered.

If the radial extension of the concentration gradient region exceeds about 20% of the radius of the particles, it is possible that sufficient improvements of capacity and power through the core region are not provided. For example, the radial extension of the concentration gradient region may refer to a thickness (e.g., an average thickness) of the concentration gradient region.

In exemplary embodiments, the radial extension of the concentration gradient region may occupy about 1% to 10% of the radius of the particles, preferably about 1% to 5% of the radius of the particles.

For example, the radial extension of the concentration gradient region may be 1 µm or less. Preferably, the radial extension of the concentration gradient region may be 0.5 µm or less, more preferably 0.2 µm or less.

In exemplary embodiments, the concentration of Ni (the molar ratio or the atomic number ratio) in the concentration gradient region may decrease in a direction from the center of the particles to the surface of the particles, and the content of Mn may increase in the direction from the center of the particles to the surface of the particles.

As described above, a slope of the concentration gradient in the concentration gradient region may be defined. In some embodiments, absolute values of the slopes of the concentration gradients of Ni and Mn may be substantially the same. For example, the concentration of Ni may decrease in the direction from the center of the particles to the surface of the particles according to the slope of the concentration gradient, and the concentration of Mn may increase in the direction from the center of the particles to the surface of the particles according to the slope of the concentration gradient. The slope of the concentration gradient may represent a ratio of a change in the molar ratio relative to an increase of the distance.

As described above, the lithium metal oxide particles may have a relatively high Mn content at the surface portion (or in the shell region) compared to that at the center portion (or in the core region).

In some embodiments, the cathode active material or the lithium metal oxide particles may further comprise a coating element or a doping element. For example, the coating element or the doping element may include Al, Ti, Ba, Zr, Si, B, Mg, P, an alloy thereof or an oxide thereof. These may be used alone or in combination of two or more therefrom. The particles of the cathode active material may be passivated by the coating or doping element, thereby further improving life-span and stability to the penetration of the external object.

In exemplary embodiments, the lithium metal oxide particles may have the single particle form. The single particle form may include the single crystal form.

In some embodiments, the lithium metal oxide particles may have a secondary particle form in which, e.g., rod-type primary particles may be aggregated.

In exemplary embodiments, an average particle diameter, in particular the D50 value, of the lithium metal oxide particles may be from about 3 µm to about 15 µm.

In forming the cathode active material or the lithium metal oxide particles, metal precursor solutions having different concentrations may be prepared. The metal precursor solution may contain metal precursors to be included in the cathode active material. For example, the metal precursor may include a halide, a hydroxide or an acid salt of the metals.

For example, the metal precursor may include a lithium precursor (e.g., lithium oxide), a nickel precursor, a manganese precursor and a cobalt precursor.

In exemplary embodiments, a first precursor solution having a target composition at the center (e.g., concentrations of nickel, manganese and cobalt and possibly also lithium at the center) of the cathode active material particles and a second precursor solution having a target composition at the surface (e.g., concentrations of nickel, manganese and cobalt and possibly also lithium at the surface) of the cathode active material particles may each be prepared.

Thereafter, the first precursor solution may be reacted and stirred to form a precipitate to form the core region. The second precursor solution may be introduced from a specific time and mixed while continuously changing a mixing ratio so that a concentration gradient may be continuously formed from the core region to the target composition at the surface. Accordingly, a precipitate may be formed such that concentrations of the metals may form the concentration gradient region within the particles. Thereafter, the second precursor solution may be additionally added to fix or stabilize the target composition at the surface to form the shell region.

In some embodiments, the precipitate may be formed by adding a chelating agent and a basic agent during the mixing of the precursor solutions. In some embodiments, the precipitate may be heat-treated, and then may be mixed with the lithium precursor and heat-treated again. This method is in particular used if the precipitate is formed from lithium-free precursors.

The above-described cathode active material may be mixed and stirred together with a binder, a conductive material and/or a dispersive agent in a solvent to form a slurry. The slurry may be coated on the cathode current collector 105, and dried and pressed to obtain the cathode active material layer 110.

The cathode current collector 105 may include, e.g., stainless steel, nickel, aluminum, titanium, copper or an alloy thereof, preferably may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrenebutadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material particles or the lithium metal oxide particles may be relatively increased. Thus, capacity and power of the lithium secondary battery may be further improved.

The conductive material may be added to facilitate electron mobility between the active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In some embodiments, an electrode density of the cathode 100 may be in a range from 3.0 g/cc to 3.9 g/cc, preferably in a range from 3.2 g/cc to 3.8 g/cc.

The anode 130 may comprise an anode current collector 125 and an anode active material layer 120 formed by coating an anode active material on the anode current collector 125. The anode active material may include a material capable of adsorbing and releasing lithium ions.

The anode active material contains a silicon-based active material and a carbon-based active material. The silicon-based active material may improve the capacity and power of the lithium secondary battery. The carbon-based active material may improve chemical stability of the lithium secondary battery.

In exemplary embodiments, the silicon-based active material may include silicon, silicon oxide, a silicon-carbon composite, a silicon oxide-carbon composite, or a silicon-silicon oxide-carbon composite.

For example, the silicon-based active material may comprise a metal or a metalloid, and the metal or the metalloid may include at least one selected from the group consisting of Li, Mg, Ge, Sn, Pb, Al, Ti, Cu, Fe, Ni, Co, Mg, Cr, Zr, Zn, W, Ga, Ba, B, As, Se, Sb, Te, Po and At.

For example, the silicon-based active material may contain a Me-silicon-carbon composite, an Me-silicon oxide-carbon composite or an Me-silicon-silicon oxide-carbon composite in which the metal or metalloid (Me) is coated or doped. Herein, "Me" stands for "metal or metalloid".

In some embodiments, silicon oxide expressed as SiO_{z} (0<z≤2) may be used as the silicon-based active material. Accordingly, an anode volume change during charging/discharging may become small while improving the capacity of the battery.

For example, the capacity and power of the lithium secondary battery may be improved by the silicon-based active material. However, when charging and discharging of the lithium secondary battery are repeated, a large volume change may be caused, and an overall volume may gradually increase (e.g., expansion or swelling). Accordingly, the life-span of the lithium secondary battery may be deteriorated.

In a comparative example, while the silicon-based active material is used as the anode active material, the lithium metal oxide particles without the concentration gradient region therein is used as the cathode active material. In this case, the life-span and chemical stability of the lithium secondary battery may be degraded.

According to exemplary embodiments of the present invention, the lithium metal oxide particles having the concentration gradient region therein may be used together with the silicon-based active material, so that the energy density and life-span stability may be improved.

In exemplary embodiments, a content of the silicon-based active material may be in a range from 1 weight percent (wt%) to 25 wt% based on a total weight of the anode active material.

Within the above range of the silicon-based active material, the capacity improvement by the silicon-based active material may be substantially implemented, and mechanical and electrical failures caused by an excessive volume change of silicon-based active material particles or the anode may be prevented. Accordingly, the capacity and life-span properties of the secondary battery may be improved.

The anode active material comprises a carbon-based active material. The carbon-based active material may include artificial graphite, soft carbon, hard carbon, carbon nanotubes, carbon fiber, pitch or cokes. Preferably, the anode active material may include artificial graphite.

For example, natural graphite may be included as the anode active material. Natural graphite may have lower strength and hardness than those of artificial graphite. If natural graphite is only used together with the silicon-based active material, natural graphite may be compressed and deformed under a stress caused when the silicon-based active material is expanded during charging and discharging. Accordingly, a conductive path formed by natural graphite may be cut, and electrical properties of the anode may be deteriorated.

In exemplary embodiments, artificial graphite may preferably be used as a main component of the carbon-based active material. Artificial graphite may have enhanced mechanical and chemical stability (e.g., a small volume change due to charging and discharging). The silicon-based active material may be used together with the carbon-based active material having artificial graphite as a main component, so that the carbon-based active material may not be compressed or deformed even when the silicon-based active material is expanded. Thus, a conductive chain of the carbon-based active material may be maintained despite the volume change of the silicon-based active material, and the improved capacity of the anode may be maintained.

In some embodiments, artificial graphite and natural graphite may be used together as the carbon-based active material. In this case, an amount of artificial graphite may be greater than that of natural graphite. Accordingly, improved mechanical/chemical stability and efficiency of a production cost may be achieved.

In exemplary embodiments, a particle size or a crystal size of the carbon-based active material may be about in a range from 5 µm to 30 µm.

In exemplary embodiments, the anode active material may consist of the silicon-based active material and the carbon-based active material.

In some embodiments, a content of the silicon-based active material may be in a range from 1 wt% to 25 wt% based on the total weight of the anode active material.

In this case, the anode active material may contain the carbon-based active material in a remainder amount (75 wt% to 99 wt%). Accordingly, the carbon-based active material may prevent degradation of life-span stability caused due to the silicon-based active material.

For example, when a silicon-based anode active material and a cathode active material based on a high nickel having a uniform concentration in the particles are used together in order to improve the capacity of the battery, the life-span of the battery and the capacity retention may be reduced. For example, a solid electrolyte interfacial (SEI) phase may become excessively thick by a reaction of nickel and an electrolyte to result in a reduction of an ion conductivity and an oxidation of a separator. Further, the conductive chain of the anode may be cut by the volume change of the silicon-based anode active material, thereby promoting the reduction of the life-span and the capacity retention.

According to exemplary embodiments of the present invention, the silicon-based anode active material and the cathode active material including the concentration gradient region (e.g., having a low nickel content in the shell region) may be used, so that the life-span of the battery may be increased while achieving a high capacity from the silicon-based anode active material.

In some embodiments, a content of silicon (Si) contained in the silicon-based active material may be in a range from 1 wt% to 48 wt% based on the total weight of the anode active material. Preferably, the content of silicon may be in a range from 1 wt% to 40 wt% based on the total weight of the anode active material. When the silicon content in the silicon-based active material satisfies the above range of 1 wt% to 48 wt%, it is possible to prevent a decrease in battery durability due to excessive volume change while implementing a sufficient capacity increase. This is in particular the case if the silicon content in the silicon-based active material satisfies the above range of 1 wt% to 40 wt%. Accordingly, the capacity characteristics and lifespan characteristics of the battery can be improved together.

For example, the anode active material and the binder may be mixed and stirred together with a conductive material, a thickener, etc., in a solvent to form a slurry. The slurry may be coated on at least one surface of the anode current collector 125, and then dried and pressed to form the anode active material layer 120.

The slurry may contain the binder, and the same binder materials that may be used in the cathode slurry may also be used for the anode. For example, SBR or an acrylic binder may be used as the binder for the anode, and CMC may be used as the thickener.

The separation layer 140 may be interposed between the cathode 100 and the anode 130. The separation layer 140 may comprise a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Therefore, the enhancement of the capacity and power by the combination of the cathode active material and the anode active material may be effectively implemented.

In exemplary embodiments, an electrode cell may be defined by the cathode 100, the anode 130 and the separation layer 140, and a plurality of the electrode cells may be stacked to form the electrode assembly 150 having, e.g., a jelly roll shape. For example, the electrode assembly 150 may be formed by winding, laminating or folding of the separation layer 140.

The electrode assembly 150 may be accommodated in an outer case 160 together with an electrolyte to form the lithium secondary battery. In exemplary embodiments, the electrolyte may comprise a non-aqueous electrolyte solution.

The non-aqueous electrolyte solution may contain a lithium salt and an organic solvent. The lithium salt may be represented by Li⁺X⁻, and an anion of the lithium salt X may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C, CF₃(CF₂)₇SO₃⁻, CF₃CO₂⁻, CH₃CO₂⁻, SCN⁻, (CF₃CF₂SO₂)₂N⁻, etc.

The organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, an electrode tab (a cathode tab and an anode tab) may be formed from each of the cathode current collector 105 and the anode current collector 125 to extend to one end of the case 160. The electrode tabs may be welded together with the one end of the outer case 160 to be connected to an electrode lead (a cathode lead 107 and an anode lead 127) exposed at an outside of the outer case 160.

The lithium secondary battery may be fabricated into a cylindrical shape using a can, a prismatic shape, a pouch shape, a coin shape, etc.

According to the above-described exemplary embodiments, lithium metal oxide particles having a concentration gradient profile may be employed as a cathode active material, and a silicon-based active material is contained in an anode active material. Accordingly, constructions for a balancing of high capacity and extended life-span may be implemented in both the cathode 100 and the anode 130, and high temperature storage properties may also be improved.

Hereinafter, preferred examples are discussed to more concretely describe the present invention. However, the following examples are only given for illustrating the present invention and those skilled in the related art will obviously understand that various alterations and modifications are possible within the scope of the present invention. Such alterations and modifications are duly included in the appended claims.

The invention relates also to the following aspects:
Aspect 1: A lithium secondary battery, comprising:
   a cathode comprising lithium metal oxide particles wherein each of said lithium metal oxide particles contain lithium, nickel (Ni) and manganese (Mn), wherein the lithium metal oxide particles respectively have a concentration gradient region formed in at least one region between a center and a surface of respective lithium metal oxide particle, wherein a concentration of nickel continuously decreases in the concentration gradient region in direction from the center to the surface of the lithium metal oxide particles, and a concentration of manganese continuously increases in the concentration gradient region in direction from the center to the surface of the lithium metal oxide particles; and
   an anode comprising an anode active material that contains a silicon-based active material and a carbon-based active material, wherein a content of the carbon-based active material in the anode active material is greater than a content of the silicon-based active material.
Aspect 2: The lithium secondary battery according to aspect 1, wherein the average length of the core region is from 50% to 98%, preferably 80 to 98%, preferably 90% to 95% of a radius of the plurality of the lithium metal oxide particles.
Aspect 3: The lithium secondary battery according to any one of the preceding aspects, wherein the average length of the shell region is from 1% to 20%, preferably 1% to 5% of a radius of the plurality of the lithium metal oxide particles.
Aspect 4: The lithium secondary battery according to any one of the preceding aspects, wherein average length of the concentration gradient region is from 1% to 20%, preferably 1% to 10%, preferably 1% to 5% of a radius of the plurality of the lithium metal oxide particles.
Aspect 5: The lithium secondary battery according to any one of the preceding aspects, wherein the plurality of the lithium metal oxide particles further contain cobalt (Co).
Aspect 6: The lithium secondary battery according to any one of the preceding aspects, wherein the concentration of nickel in an entire particle region is from 0.7 to 0.9
Aspect 7: The lithium secondary battery according to any one of the preceding aspects, wherein the sum of concentrations of manganese and the third metal, preferably cobalt, in an entire particle region is from 0.1 to 0.3.

### Example 1 to 17

### (1) Fabrication of cathode

Precipitates were formed by continuously changing a mixing ratio of precursors such that a total average composition was LiNi_{0.80}Co_{0.11}Mn_{0.09}O₂, compositions of a central portion (core region) and a surface portion (shell region) were LiNi_{0.802}Co_{0.11}Mn_{0.088}O₂ and LiNi_{0.77}C_{0.11}Mn_{0.12}O₂, respectively, and concentration gradients of Ni and Mn were formed between the central portion and the surface portion.

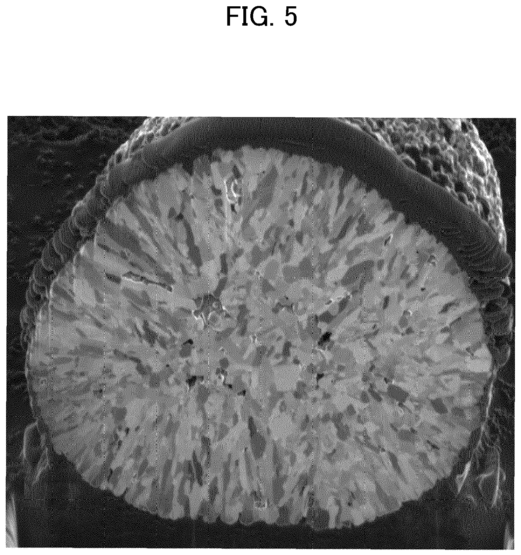

Accordingly, lithium-metal oxide particles (hereinafter, referred to as CSG particles) having a continuous concentration gradient between the central portion and the surface portion (average particle diameter (D50): 4.8 µm) were prepared as a cathode active material. A cross-section of one of the CSG particles is shown in FIG. 5.

Molar ratios of metal elements (Ni, Mn, and Co) of the lithium metal oxide particles (CSG particles) having a radius of 4.8 µm and an approximately spherical form were measured with an interval of 0.4 µm from center as shown in Table 1 below. In a section between 4.4 µm from the center to 4.8 µm (an outermost surface), the molar ratios of the metal elements were measured with an interval of 0.04 µm.

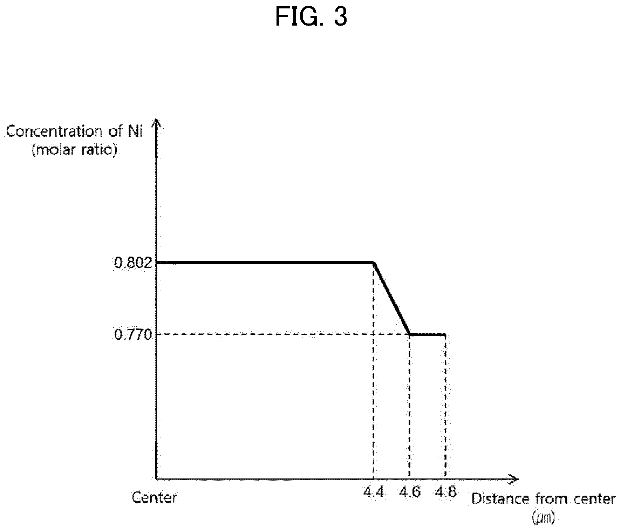

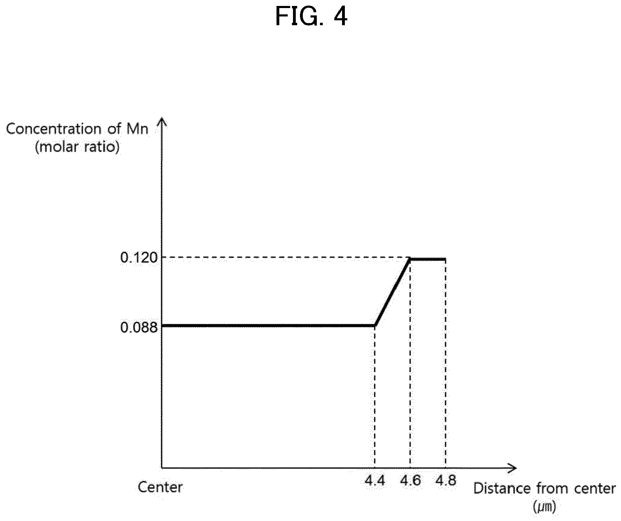

Profiles of the molar ratios of Ni and Co based on a distance from the center are schematically shown in FIGS. 3 and 4.

**[Table 1]**

| Distance from center (µm) | Molar ratio of Ni | Molar ratio of Co | Molar ratio of Mn |
|---|---|---|---|
| 0 | 0.802 | 0.110 | 0.088 |
| 0.4 | 0.801 | 0.111 | 0.088 |
| 0.8 | 0.802 | 0.110 | 0.088 |
| 1.2 | 0.802 | 0.110 | 0.088 |
| 1.6 | 0.803 | 0.111 | 0.086 |
| 2.0 | 0.802 | 0.110 | 0.088 |
| 2.4 | 0.802 | 0.110 | 0.088 |
| 2.8 | 0.802 | 0.109 | 0.089 |
| 3.2 | 0.801 | 0.110 | 0.089 |
| 3.6 | 0.802 | 0.110 | 0.088 |
| 4.0 | 0.802 | 0.108 | 0.090 |
| 4.4 | 0.800 | 0.110 | 0.090 |
| 4.44 | 0.794 | 0.110 | 0.096 |
| 4.48 | 0.789 | 0.109 | 0.102 |
| 4.52 | 0.782 | 0.110 | 0.108 |
| 4.56 | 0.777 | 0.110 | 0.113 |
| 4.60 | 0.770 | 0.110 | 0.120 |
| 4.64 | 0.771 | 0.110 | 0.119 |
| 4.68 | 0.770 | 0.110 | 0.120 |
| 4.72 | 0.769 | 0.111 | 0.120 |
| 4.76 | 0.770 | 0.109 | 0.121 |
| 4.8 | 0.770 | 0.110 | 0.120 |

The cathode active material, a carbon black commercially available under the trade name Denka Black as a conductive material, and PVDF as a binder were mixed in a mass ratio of 92:5:3 to prepare a cathode mixture. The cathode mixture was coated on an aluminum substrate, dried and pressed to obtain a cathode. A density of the cathode after the pressing was 3.3 g/cc.

### (2) Fabrication of anode

An anode mixture including 93 wt% of an anode active material, 5 wt% of a flake type conductive material KS6 as a conductive material, 1 wt% of SBR as a binder, and 1 wt% of CMC as a thickener were prepared. The anode mixture was coated on a copper substrate, dried and pressed to obtain an anode.

In the anode active material, artificial graphite was used as a carbon-based active material, and silicon oxide (SiOₓ) was used as a silicon-based active material. The carbon-based active material and the silicon-based active material were mixed in ratios as shown in Table 2 below to be used as the anode active material of Examples 1 to 17.

The silicon-based active material was added so that a silicon content based on a total weight of the anode active material was adjusted as shown in Table 2.

### (3) Fabrication of secondary battery

The cathode and the anode obtained as described above were notched with a proper size and stacked, and a separator (polyethylene, thickness: 25µm) was interposed between the cathode and the anode to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for 12 hours or more.

The electrolyte was prepared by preparing 1M LiPF₆ solution in a mixed solvent of EC/EMC/DEC (25/45/30; volume ratio), and then adding 1 wt% of vinylene carbonate, 0.5 wt% of 1,3-propensultone, and 0.5 wt% of lithium bis(oxalato) borate (LiBOB).

Thereafter, a pre-charging was performed for 36 minutes at a current (5A) corresponding to 0.25C. After 1 hour, degassing was performed, and then aging was performed for 24 hours or more, followed by a formation charging/discharging (charge condition CC-CV 0.2C 4.2V 0.05C CUT-OFF, discharge condition CC 0.2C 2.5V CUT-OFF). Subsequently, a standard charging/discharging was performed (charge condition CC-CV 0.5C 4.2V 0.05C CUT-OFF, discharge condition CC 0.5C 2.5V CUT-OFF).

### Examples 18-20

Secondary batteries were prepared by the same method as that in Examples 1 to 17, except that pure silicon (Si) was used as the silicon-based active material by amounts as shown in Table 2.

### Example 21

Lithium metal oxide particles having the CSG structure of Examples 1 to 17 and having a single particle form was prepared. The lithium metal oxide particles were used as a cathode active material, and a secondary battery was fabricated by the same method as that in Examples 1 to 17.

### Comparative Examples 1 to 16, and 19

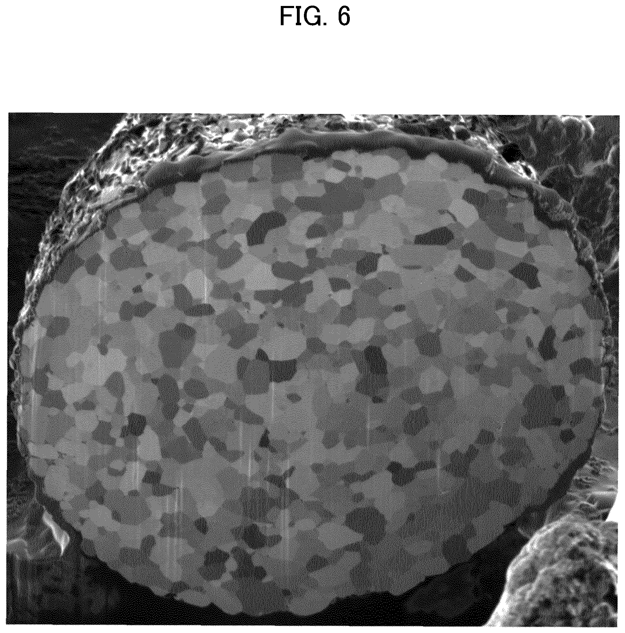

A secondary battery was manufactured by the same manner as in Examples, except that LiNi_{0.8}Co_{0.1}Mn_{0.1}O₂ (hereinafter, referred to as NCM811 particles) without a concentration gradient which had a uniform composition throughout the particles was used instead of the CSG particles as a cathode active material. A cross-section of one of the NCM811 particles is shown in FIG. 6.

### Comparative Examples 17 to 18

Secondary batteries were fabricated by the same method as that in Examples, except that contents of the silicon-based active material and silicon were adjusted as shown in Table 2.

### Experimental Evaluation

### (1) Evaluation on capacity retention

Charging (CC-CV 1.0C 4.2V 0.1C CUT-OFF) and discharging (CC 1.0C 3.0V CUT-OFF) were repeated 500 times for each lithium secondary battery prepared in the Examples and the Comparative Examples, and a capacity retention rate was evaluated by calculating a ratio (%) of a discharge capacity at the 500th cycle relative to a discharge capacity at the 1st cycle.

### (2) Evaluation on energy density and power

Each lithium secondary battery prepared in the Examples and the Comparative Examples was charged (CC-CV 1.0 C 4.2V 0.05C CUT-OFF) and discharged (CC 1.0C 2.7V CUT-OFF) by one cycle, and a measured capacity was converted into an energy density.

The results are shown in Table 2 below.

**[Table 2]**

| No. | cathode active material | anode active material | | | capacity retention (at 500th cycle, %) | energy density (Wh/L) |
|---|---|---|---|---|---|---|
| | | carbon-based active material (wt%) | silicon-based active material (wt%) | silicon content (wt%) | | |
| Example 1 | CSG | 99.5 | 0.5 | 0.3 | 94.9 | 440 |
| Example 2 | CSG | 99 | 1 | 0.5 | 94.7 | 443 |
| Example 3 | CSG | 98 | 2 | 1.0 | 94.4 | 446 |
| Example 4 | CSG | 97 | 3 | 1.6 | 93.8 | 450 |
| Example 5 | CSG | 96 | 4 | 2.1 | 93.3 | 455 |
| Example 6 | CSG | 95 | 5 | 2.6 | 93.1 | 459 |
| Example 7 | CSG | 94 | 6 | 3.1 | 92.6 | 464 |
| Example 8 | CSG | 93 | 7 | 3.6 | 92.4 | 467 |
| Example 9 | CSG | 92 | 8 | 4.2 | 91.9 | 472 |
| Example 10 | CSG | 91 | 9 | 4.7 | 91 | 475 |
| Example 11 | CSG | 90 | 10 | 5.2 | 90.3 | 478 |
| Example 12 | CSG | 89 | 11 | 5.7 | 89.5 | 482 |
| Example 13 | CSG | 88 | 12 | 6.2 | 88.6 | 485 |
| Example 14 | CSG | 87 | 13 | 6.8 | 87.5 | 489 |
| Example 15 | CSG | 84 | 16 | 8.3 | 86.4 | 493 |
| Example 16 | CSG | 80 | 20 | 10.4 | 85.1 | 497 |
| Example 17 | CSG | 74 | 26 | 13.5 | 80.2 | 498 |
| Example 18 | CSG | 59 | 41 | 41 | 75.8 | 510 |
| Example 19 | CSG | 53 | 47 | 47 | 72.3 | 528 |
| Example 20 | CSG | 51 | 49 | 49 | 68.2 | 542 |
| Example 21 | CSG (single particle form) | 90 | 10 | 5.2 | 92.1 | 468 |
| Comparative Example 1 | NCM811 | 99.5 | 0.5 | 0.3 | 82.5 | 440 |
| Comparative Example 2 | NCM811 | 99 | 1 | 0.5 | 82.2 | 443 |
| Comparative Example 3 | NCM811 | 98 | 2 | 1.0 | 81.5 | 446 |
| Comparative Example 4 | NCM811 | 97 | 3 | 1.6 | 80.4 | 450 |
| Comparative Example 5 | NCM811 | 96 | 4 | 2.1 | 80 | 455 |
| Comparative Example 6 | NCM811 | 95 | 5 | 2.6 | 79.2 | 459 |
| Comparative Example 7 | NCM811 | 94 | 6 | 3.1 | 78.1 | 464 |
| Comparative Example 8 | NCM811 | 93 | 7 | 3.6 | 76.9 | 467 |
| Comparative Example 9 | NCM811 | 92 | 8 | 4.2 | 75.8 | 472 |
| Comparative Example 10 | NCM811 | 91 | 9 | 4.7 | 74.7 | 475 |
| Comparative Example 11 | NCM811 | 90 | 10 | 5.2 | 73.6 | 478 |
| Comparative Example 12 | NCM811 | 89 | 11 | 5.7 | 72.4 | 482 |
| Comparative Example 13 | NCM811 | 88 | 12 | 6.2 | 70.6 | 485 |
| Comparative Example 14 | NCM811 | 87 | 13 | 6.8 | 69.3 | 489 |
| Comparative Example 15 | NCM811 | 86 | 14 | 7.3 | 67.5 | 493 |
| Comparative Example 16 | NCM811 | 85 | 15 | 7.8 | 66 | 497 |
| Comparative Example 17 | CSG | 100 | 0 | 0 | 95.1 | 437 |
| Comparative Example 18 | CSG | 40 | 60 | 66 | 61 | 588 |
| Comparative Example 19 | NCM811 | 100 | 0 | 0 | 82.9 | 437 |

Referring to Table 2, when the lithium metal oxide particles with a concentration gradient region therein were used as the cathode active material and a silicon-based active material was contained in the anode active material, improved energy density and life-span properties were obtained.

Specifically, in Examples where the CSG particles were used as a cathode active material, the silicon-based active material and the carbon-based active material were employed together as the anode active material, and a content of the carbon-based active material was greater than that of the silicon-based active material, improved energy density and life-span properties were provided when compared to those from Comparative Examples.

In Example 21, where the CSG particles of the single particle form were used as the cathode active material, an improved capacity retention as compared to that from Example 11 having the same composition of the anode active material was obtained.

In Example 1, where the content of the silicon-based active material and the silicon content were each less than 1 wt% based on a total weight of the anode active material, the capacity retention was improved, but the energy density was relatively reduced compared to those from other Examples.

In Examples 17 to 20, where the content of the silicon-based active material exceeded 25 wt% based on the total weight of the anode active material, the energy density was higher than those from other Examples, but the capacity retention was relatively decreased.

In Example 20, where the silicon content exceeded 48 wt% based on the total weight of the anode active material, the energy density was higher than those from other Examples, but the capacity retention rate was relatively decreased.

In Comparative Examples 1 to 16, and 19, where the particles (NCM811 particles) having uniform concentrations therein were used as the cathode active material, the capacity retentions were significantly reduced compared to those from Examples having the same or similar anode active material composition.

In Comparative Example 17, where the CSG particles were employed as the cathode active material, and the silicon-based active material was not used as the anode active material, the capacity retention was improved, but the energy density was significantly degraded.

In Comparative Example 18, where the CSG was employed as the cathode active material, and the content of the carbon-based active material was less than the content of the silicon-based active material in the anode active material, the energy density was improved, the capacity retention rate was excessively decreased.

## Claims

1. A lithium secondary battery, comprising:
a cathode comprising lithium metal oxide particles that contain lithium and further metal elements, the lithium metal oxide particles respectively having a concentration gradient region formed in at least one region between a center and a surface of the respective lithium metal oxide particle, wherein a concentration of at least one of the further metal elements is changed in the concentration gradient region; and
an anode comprising an anode active material that contains a silicon-based active material and a carbon-based active material, the anode being disposed to face the cathode,
wherein a content of the carbon-based active material in the anode active material is greater than a content of the silicon-based active material.

2. The lithium secondary battery of claim 1, wherein the lithium metal oxide particles comprise a first metal different from lithium and a second metal different from lithium as further metal elements,
wherein a concentration of the first metal continuously decreases in a direction from the center to the surface in the concentration gradient region, and
wherein a concentration of the second metal continuously increases in a direction from the center to the surface in the concentration gradient region,
wherein optionally the lithium metal oxide particles further comprise a third metal different from lithium as another further metal element,
wherein preferably a concentration of the third metal is constant from the center to the surface.

3. The lithium secondary battery of any of the preceding claims, wherein the concentration of at least one of the further metal elements is changed in the concentration gradient region such that a concentration gradient with a constant slope, preferably a slope being constant throughout the concentration gradient region, results.

4. The lithium secondary battery of any of the preceding claims, wherein the lithium metal oxide particles have a core region occupying a predetermined radial extension from the center towards the surface of the lithium metal oxide particles, wherein in the core region, the concentrations of the metal elements are constant, and
wherein preferably the predetermined radial extension is 50% or more of a radius of the lithium metal oxide particles from the center towards the surface of the lithium metal oxide particles.

5. The lithium secondary battery according to any of the preceding claims, wherein the lithium metal oxide particles have a shell region in which the concentrations of the further metal elements are constant, and
wherein the shell region extends from the surface of the lithium metal oxide particles in a direction toward the center of the lithium metal oxide particles.

6. The lithium secondary battery of claim 4 or 5, wherein the concentration gradient region extends from the surface of the lithium metal oxide particles to a surface of the core region of the lithium metal oxide particles,
or wherein the concentration gradient region extends from a surface of the shell region to a surface of the core region of the lithium metal oxide particles.

7. The lithium secondary battery of claim 5 or 6, wherein a radial extension of the shell region from the surface of the lithium metal oxide particles in a direction toward the center is from 1% to 20% of a radius of the lithium metal oxide particles.

8. The lithium secondary battery of any of the preceding claims, wherein a distance between an outer surface of the concentration gradient region and the surface of the particles is shorter than a distance between an inner surface of the concentration gradient region and the center of the particles.

9. The lithium secondary battery of any of the preceding claims, wherein the lithium metal oxide particles have a single particle form.

10. The lithium secondary battery of any of the preceding claims, wherein an average composition of the lithium metal oxide particles is represented by Chemical Formula 1:
[Chemical Formula 1] LiₓM1ₐM2_{b}M3_{c}O_{y}
wherein, in Chemical Formula 1, M1, M2 and M3 represent the first, second, and third further metal elements, wherein each of M1 to M3 includes at least one selected from the group consisting of Ni, Co, Mn, Na, Mg, Ca, Ti, V, Cr, Cu, Zn, Ge, Sr, Ag, Ba, Zr, Nb, Mo, Al, Ga, W and B, and
0<x≤1.2, 1.98≤y≤2.02, 0.6≤a≤0.99 and 0.01≤b+c≤0.4,

11. The lithium secondary battery of claim 10, wherein M1 is Ni, M2 is Mn, and M3 is Co.

12. The lithium secondary battery of any of the preceding claims, wherein the silicon-based active material comprises at least one selected from the group consisting of silicon, a silicon oxide, a silicon-carbon composite, a silicon oxide-carbon composite and a silicon-silicon oxide-carbon composite,
wherein preferably the silicon-based active material further comprises a metal or a metalloid, and
wherein more preferably the metal or metalloid includes at least one selected from the group consisting of Li, Mg, Ge, Sn, Pb, Al, Ti, Cu, Fe, Ni, Co, Mg, Cr, Zr, Zn, W, Ga, Ba, B, As, Se, Sb, Te, Po and At.

13. The lithium secondary battery of claim 12, wherein the silicon oxide is represented as SiO_{z} (0<z≤2).

14. The lithium secondary battery of any of the preceding claims, wherein a content of the silicon-based active material is in a range from 0.5 wt% to 49 wt%, preferably 0.5 wt% to 26 wt%, more preferably 1 wt% to 25 wt% based on a total weight of the anode active material, and
wherein a silicon content in the silicon-based active material is in a range from 0.3 to 49 wt%, preferably 1 wt% to 48 wt%, more preferably 0.3 wt% to 13.5 wt% based on a total weight of the anode active material.

15. The lithium secondary battery of any of the preceding claims, wherein the carbon-based active material comprises at least one selected from the group consisting of artificial graphite, soft carbon, hard carbon, carbon nanotube, carbon fiber, pitch and cokes.
